# EUROPEAN PATENT APPLICATION

(11) **EP 1 806 874 A1**
(43) Date of publication of application: **11.07.2007**
(21) Application number: 06127098.9
(22) Date of filing: 22.12.2006
(51) Int. Cl.: H04L 12/28, H04L 12/26

(54) **Apparatus and method for analyzing XHT protocol**

(30) Priority: 10.01.2006 KR 20060002847
(71) Applicant: Samsung Electronics Co., Ltd., Yeongtong-gu Suwon-city, Gyeonggi-do 442-742 (KR)
(72) Inventor: Lee, Hun-gu, Seoul (KR); Chu, Chang-nam, Suji-gu, Yongin-si Gyeonggi-do (KR)
(74) Representative: Brandon, Paul Laurence

(57) **Abstract**

An apparatus and a method for analyzing an XHT protocol are provided. The apparatus includes a packet collecting unit which captures packets on a network and collects data to be analyzed; a classifying unit which classifies the packets according to type of packets; and a protocol verifying unit which verifies whether the classified packets are suitable for an XHT standard according to the type of packets.

## Description

The present invention relates to apparatus and methods for analyzing an XHT protocol.

In recent years, with the development of a digital audio/video (hereinafter, referred to as AV) processing technique, various AV apparatuses, such as a digital television, a set-top box, a DVD player, and a digital amplifier, have been installed and used in homes and offices. In addition, a technique for integrating a plurality of AV apparatuses into one system so as to be operatively associated with each other, making it easy for a user to control the AV apparatuses, has been studied. In this study, the AV apparatuses are connected to one another through a network interface, and thus an AV network system is constructed.

As a part of the study, in recent years, an XHT (eXpandable Home Theater) standard, which is middleware for AV home networking, has been developed and proposed. The XHT technique is a home network solution, centered on a digital TV, which has been developed by SAMSUNG ELECTRONICS CO., LTD., and is adopted as a standard of CEA (Consumer Electronics Association).

According to the XHT technique, an A/V apparatus connected to a digital TV and a plurality of digital TVs can be controlled using an IEEE 1394 cable that can stably transmit high definition (HD) signals and an Internet protocol (IP) that is a communication protocol usually used in the Internet. The XHT technique enables a user in a bedroom to view digital broadcasting using a digital broadcast receiving function of a digital TV installed in a living room.

A cheap network interface unit (NIU) using the XHT technique is formed in the shape of a memory card and is thus easy to change according to a receiving scheme, such as a terrestrial, satellite, or cable scheme, thereby reducing the financial burden on a broadcasting company. In particular, the XHT technique can provide diverse portal services through a browser embedded in a digital TV.

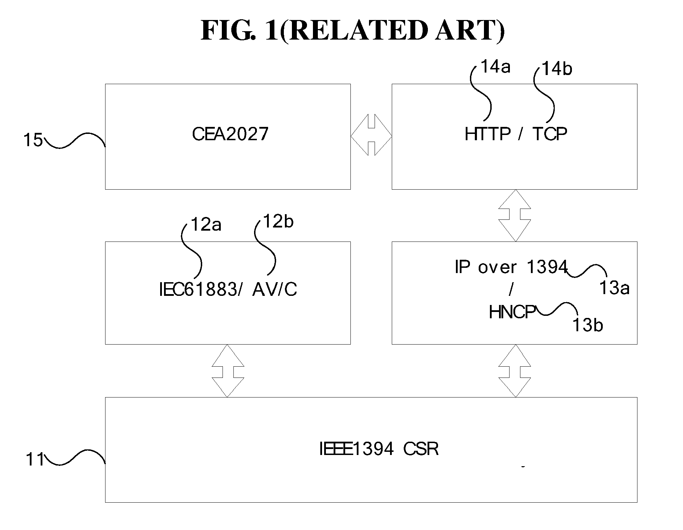

FIG. 1 is a diagram illustrating the configuration of an XHT system according to the related art.

The XHT system is based on the IEEE 1394 network, and basically performs the following functions: transmission of data streams using IEC61883, control between apparatuses using AV/C, and GUI (graphic user interface) transmission based on HTTP (hypertext transfer protocol)/CEA2027.

The XHT system has an IEEE 1394 bus. The IEEE 1394 network supports daisy-chain, self-configuration, and hot-plug and also supports an asynchronous transmission mode in which the integrity of transmission is ensured and an isochronous transmission mode in which real-time transmission is ensured. In addition, the XHT system transmits data streams through the IEEE 1394 bus according to an IEC61883 protocol 12a.

An IEEE 1394 CSR (control and status register) 11 is composed of various core registers, such as a configuration ROM and CycleStart.

The IEC61883 protocol 12a is a protocol for transmitting data streams in real time over the IEEE 1394 network. Therefore, a transmission type and a protocol depend on the type of streams, and the IEC61883 protocol 12a includes a point-point protocol, a broadcast protocol, and a protocol related to stream connection for overlay connection, on the basis of a plug, a bandwidth and a channel register.

An AV/C protocol 12b is a protocol for transmitting/receiving control instructions and hot-plug of the AV apparatuses connected over the IEEE 1394 network.

An IP over 1394 protocol 13a is a protocol for transmitting/receiving a user interface, and communicates through a link layer of the IEEE 1394 bus. An IP over 1394 protocol 13a emulates an Ethernet layer over the IEEE 1394 network and enables IP-based communication to be performed over the IEEE 1394 network.

An HNCP (home network control protocol) 13b is a protocol for allocating IP addresses over the IEEE 1394 network.

Meanwhile, the user interface is transmitted using HTML, and an HTTP 14a based on a TCP 14b is used to transmit the user interface. Similar to other systems based on the TCP 14b, the HTTP 14a and the TCP 14b of the XHT system operate on the IP over 1394 13a.

A CEA2027 protocol 15 is a protocol related to a method of creating GUI on the basis of HTML in the XHT system and using GUI. The CEA2027 protocol 15 defines specifications of URI (uniform resource identifier) in the HTTP 14a and also defines a protocol for the transmission of URI.

However, the XHT system does not have a protocol analyzing apparatus for analyzing the overall XHT system. Therefore, in the related art, analysis is mainly performed on the IEEE 1394 bus, and thus only a signal packet is analyzed, which makes it difficult to analyze the overall XHT system. In addition, a tool for analyzing and verifying, for example, HNCP, CCM, and CEA2027 used for the XHT system has not been developed yet.

Accordingly, a technique for analyzing and verifying protocols of the overall XHT system is needed.

An aim of preferred embodiments of the present invention is to provide an apparatus and method for analyzing an XHT protocol.

According to an aspect of the invention, there is provided an apparatus for analyzing an XHT protocol includes a packet collecting unit which captures packets on a network and collects data to be analyzed; a classifying unit which classifies the packets according to a type of packets; and a protocol verifying unit which verifies whether the classified packets are suitable for an XHT standard according to the type of packets.

According to another aspect of the invention, there is provided a method of analyzing an XHT protocol includes capturing packets on a network and collecting data to be analyzed; classifying the packets according to a type of packets; and verifying whether the classified packets are suitable for an XHT standard according to the type of packets.

Further features of the present invention are set out in the appended claims.

The present invention will become more apparent by describing in detail preferred embodiments thereof with reference to the attached drawings, in which:
FIG. 1 is a diagram illustrating an XHT system according to a related art;
FIG. 2 is a block diagram illustrating an apparatus for analyzing an XHT protocol according to an exemplary embodiment of the invention;
FIG. 3 is a flowchart illustrating a process of analyzing the XHT protocol according to an exemplary embodiment of the invention;
FIG. 4 is a detailed conceptual diagram illustrating a process of analyzing the XHT protocol according to an exemplary embodiment of the invention;
FIG. 5 is a diagram illustrating a process of analyzing configuration ROM data according to an exemplary embodiment of the invention;
FIG. 6 is a diagram illustrating a process of analyzing a CMP sequence on the basis of an IEC61883 protocol according to an exemplary embodiment of the invention;
FIG. 7 is a diagram illustrating a process of analyzing HNCP according to an exemplary embodiment of the invention;
FIG. 8 is a diagram illustrating a process of analyzing CCM according to an exemplary embodiment of the invention;
FIG. 9 is a diagram illustrating a process of analyzing CEA2027 according to an exemplary embodiment of the invention;
FIG. 10 is a diagram illustrating a screen displayed by a packet viewer according to an exemplary embodiment of the invention;
FIG. 11 is a diagram illustrating a screen displayed by an action viewer according to an exemplary embodiment of the invention, and shows a configuration ROM action; and
FIG. 12 is a diagram illustrating a screen displayed by a flow viewer according to an exemplary embodiment of the invention.

Aspects and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of the invention are shown.

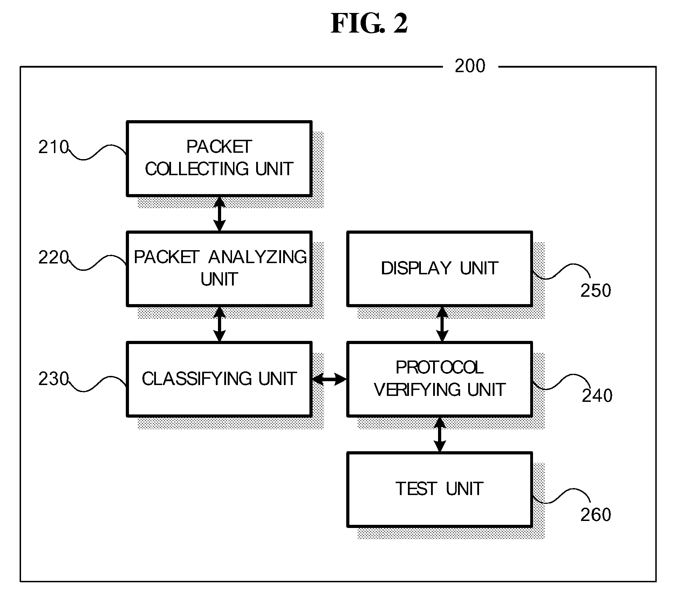

FIG. 2 is a block diagram illustrating an XHT protocol analyzing apparatus according to an exemplary embodiment of the invention.

An XHT protocol analyzing apparatus 200 includes a packet collecting unit 210, a packet analyzing unit 220, a classifying unit 230, a protocol verifying unit 240, a display unit 250, and a test unit 260.

The packet collecting unit 210 captures packets over an IEEE 1394 network and collects data to be analyzed.

The packet analyzing unit 220 analyzes the packets collected by the packet collecting unit 210 from an IEEE 1394 link layer.

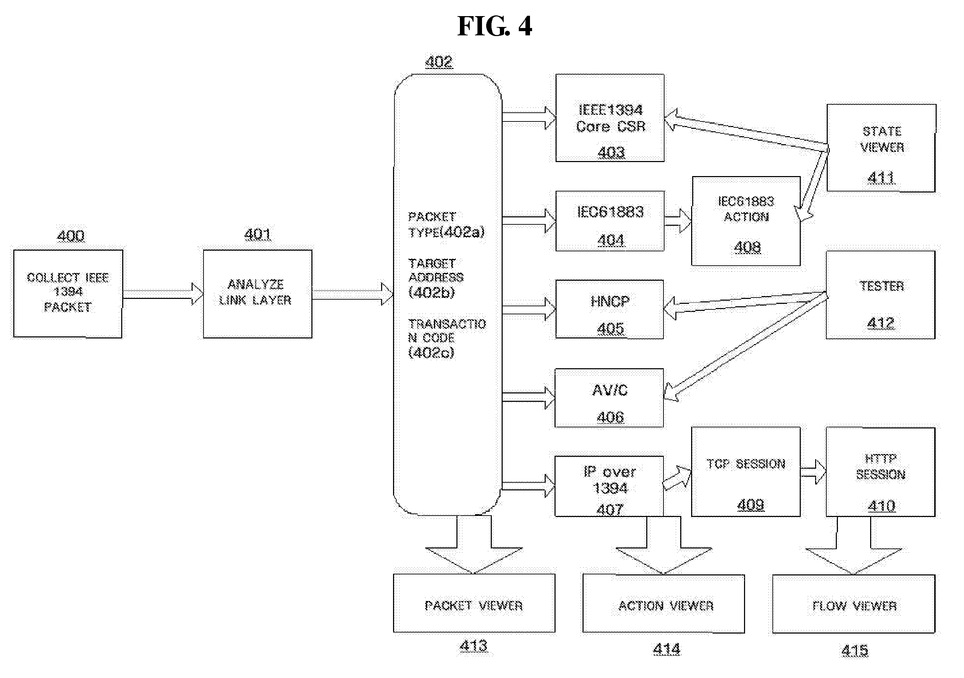

The classifying unit 230 classifies the packets analyzed by the packet analyzing unit 220 on the basis of a packet type 402a, a target address 402b, and a transaction code (T-code) 402c shown in FIG. 4.

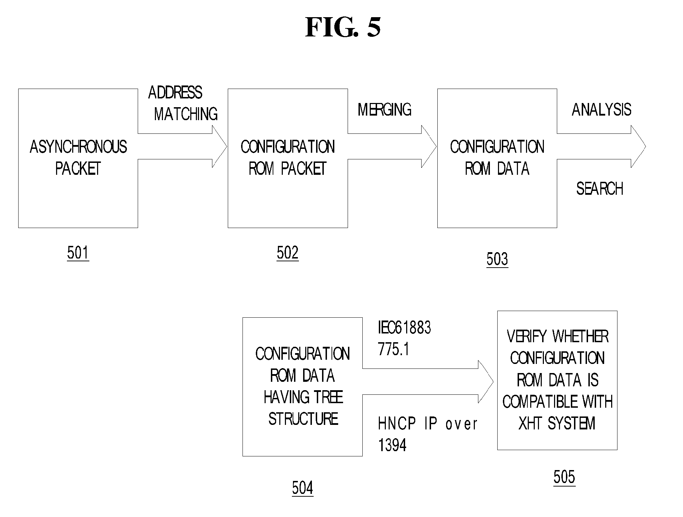

The protocol verifying unit 240 verifies whether the packets classified by the classifying unit 230 are suitable for an XHT standard. For example, the protocol verifying unit 240 verifies whether packets, that is, IEEE 1394 Core CSR 403 including configuration ROM data, IEC61883 404, HNCP 405, AV/C 406, and IP over 1394 407, shown in FIG. 4, are suitable for the XHT standard. A detailed description thereof will be made below with reference to FIGS. 5 to 9.

The display unit 250 displays on a screen specifications of a protocol stack obtained by analyzing each layer of the packets, a result obtained by analyzing linkage between the packets, and a verifying process when the verification of the packets is completed. The display unit 250 includes a packet viewer 413, an action viewer 414, a flow viewer 415, a CMP (connection management protocol) state viewer 411 of the configuration ROM data and IEC61883, shown in FIG. 4. The display unit may be omitted in other embodiments.

The test unit 260 transmits a predetermined instruction to nodes on the IEEE 1394 network and checks whether the nodes are suitable for the XHT standard (protocol) according to the reaction of the nodes. The test unit 260 includes a tester 412 for HNCP and AV/C, shown in FIG. 4, but it may be omitted in other embodiments.

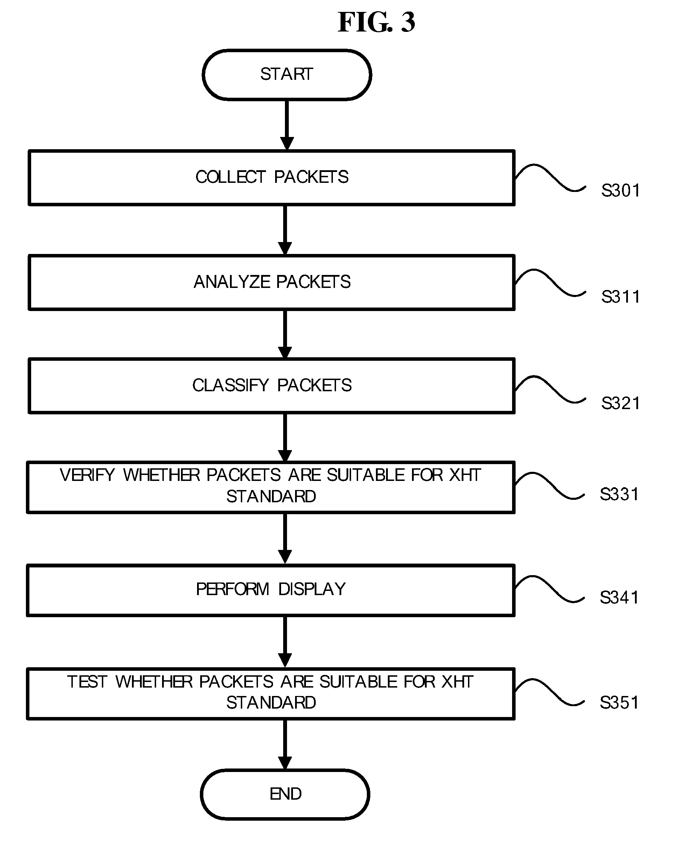

FIG. 3 shows a flowchart illustrating a process of analyzing the XHT protocol according to an exemplary embodiment of the invention.

The packet collecting unit 210 captures packets of the IEEE 1394 network and collects data to be analyzed (S301).

The packet analyzing unit 220 analyzes the collected packets from the IEEE 1394 link layer (S311).

The analyzed packets are classified on the basis of the packet type 402a, the target address 402b, and the transaction code 402c shown in FIG. 4 (S321).

Whether the classified packets are suitable for the XHT standard is verified (S331).

The display unit 250 displays on the screen the specifications of a protocol stack obtained by analyzing each layer of the packets, the result obtained by analyzing linkage between the packets, and the verifying process when the verification of packets is completed (S341).

Then, the test unit 260 transmits a predetermined instruction to nodes on the IEEE 1394 network and checks whether the nodes are suitable for the XHT standard according to the reaction of the nodes (S351). Steps S341 and S351 may be omitted in other embodiments.

FIG. 4 is a detailed conceptual block diagram illustrating a process of analyzing the XHT protocol according to an exemplary embodiment of the invention.

In step 400, the packet collecting unit 210 captures packets of the IEEE 1394 network and collects data to be analyzed. When a packet snooping function is provided, it is possible to collect packets of the overall network. In general, it is possible to collect packets passing through nodes on the network. For example, it is possible to use an IEEE 1394 physical layer controller having a packet capturing function to collect packets on the IEEE 1394 network.

In step 401, the packet analyzing unit 220 analyzes the content of packet data from the IEEE 1394 link layer.

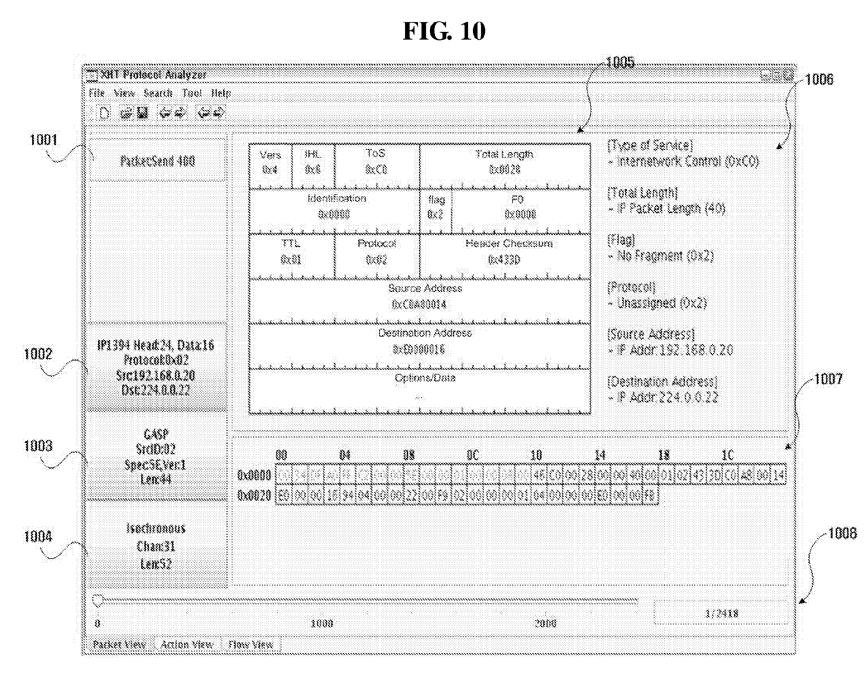

In step 402, the classifying unit 230 classifies the packets collected in step 400 on the basis of the packet type 402a, the target address 402b, and the transaction code 402c. The details of the analyzed packets may be provided to a user through the packet viewer 413. A screen displayed by the packet viewer 413 is shown in FIG. 10, for example.

The packets may be classified into IEEE 1394 Core CSR including configuration ROM data, IEC61883, HNCP, AV/C, and IP over 1394 according to the standards 402a, 402b, and 402c.

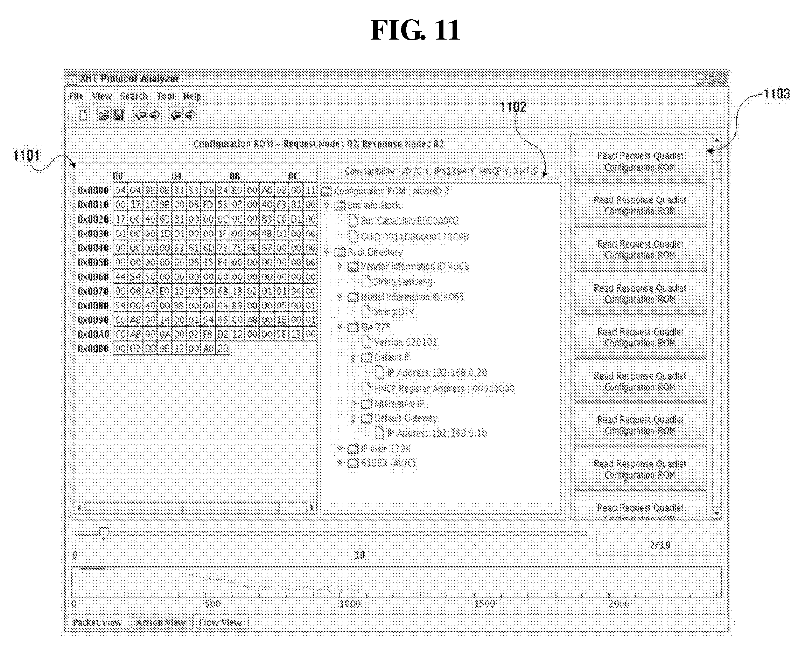

The protocol verifying unit 240 verifies whether the packets (that is, for example, IEEE 1394 Core CSR, IEC61883, HNCP, AV/C, and IP over 1394) classified through steps 403 to 410 are suitable for the XHT standard, which will be described in detail below with reference to FIGS. 5 to 9. In addition, linkage between a plurality of packets classified through steps 403 to 407 is analyzed, and the plurality of packets is recognized as one operation. The result obtained by analyzing the linkage between the packets is regarded as "one action", and it may be provided to the user through the action viewer 414. Therefore, a plurality of packets is recognized as one action, unlike a structure in which data classified in the existing packet classifying process is analyzed as one packet, and thus it is easy to analyze the overall XHT system. A screen displayed by the action viewer 414 is shown in FIG. 11, for example.

In step 408, the IEC 61883 packet 404 is merged into an IEC61883 action in the process of analyzing a plurality of packets as one action, which is achieved by analyzing the link layer.

In step 409, the analysis of HTTP/TCP is performed by classifying a plurality of IP over 1394 packets 407 into TCP sessions and by merging the TCP sessions. Preferably, the TCP sessions are traced and detected by a TCP connection state diagram. When, a series of connections are detected, a corresponding port is inspected to search a type of an upper layer protocol, a server, and a client. In this case, TCP connection establish is composed of SYN-SYNACK-ACK, and Close is composed of FIN1-FIN1ACK-FIN2-FIN2ACK. The packets are classified by sessions according to the sequence of packets of TCP. As a result, the TCP sessions are created.

In step 410, the TCP session is analyzed as an HTTP session, and CEA2027 analysis is performed according to the analyzed result. It is possible to know HTTP connection by inspecting the port number of TCP connection. For example, HTTP connection can detect a server and a client having a source of 80 ports in the setting of TCP connection. In addition, HTTP is a protocol having a text-based request/response structure, and is classified into a header and data. When an HTTP session is detected, it is possible to know a required URI address and the type and content of an answer (for example, an RFC1341 format) by analyzing request and response headers. In case of a URI defined by CEA2027, it is possible to detect that a corresponding apparatus has performed an operation related to CEA2027. An instruction word defined by CEA931-B can be also detected by the analysis of the URI.

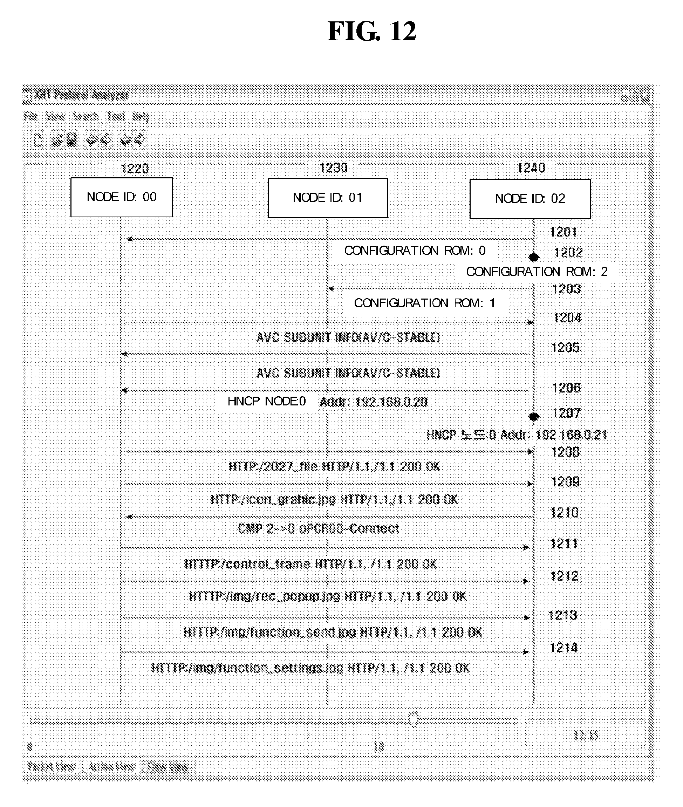

When the analysis of action is completed, the overall flow can be provided to the user through the flow viewer 415. A screen displayed by the flow viewer 415 is shown in FIG. 12, for example.

Preferred embodiments of the present invention provide a method of testing a target apparatus using a predetermined tool as well as a capture-based technique. The tool may be composed of a CMP state viewer 411 of configuration ROM data and IEC61883 and a tester 412 for HNCP and AV/C. The state viewer 411 has a function of inspecting the state of a current network and corresponding nodes and displaying the state to the user. The tester 412 transmits a predetermined instruction to the nodes and tests whether the nodes are suitable for the XHT standard according to the reaction of the nodes.

FIG. 5 shows a process of analyzing the configuration ROM data according to an exemplary embodiment of the invention.

The process shown in FIG. 5 corresponds to step 403 shown in FIG. 4.

It is possible to obtain an asynchronous packet corresponding to step 501 according to the result of step 401 shown in FIG. 4. A process between steps 501 and 502 is performed by the process in step 402 shown in FIG. 4, and it is possible to classify the configuration ROM packet by inspecting and matching an address used when an apparatus (node) on the network transmits a packet. For example, the address of a configuration ROM is in the range of 0x400 to 0x800 and is defined by IEEE 1394 Core CSR. Therefore, it is inspected whether the address used when an apparatus on the network transmits a packet is in the range of 0x400 to 0x800. When the address is in the range of 0x400 to 0x800, the packet is determined as a configuration ROM packet.

In step 503, the configuration ROM packets are merged according to nodes on the network to create configuration ROM data.

In step 504, the created configuration ROM data is analyzed, and a tree structure is searched, thereby creating the configuration ROM data having the tree structure. The configuration ROM data having the tree structure includes a node for each unit.

Steps 503 and 504 are performed in steps 403 shown in FIG. 4, and it is determined in step 505 whether the configuration ROM data having the tree structure includes indispensable components of an XHT system, such as IEC61883, EIA775.1, HNCP, and IP over 1394, on the basis of the result obtained in the previous steps, thereby verifying whether the configuration ROM data is compatible with the XHT system. The verification may be performed by using the state viewer 411 and the tester 412 shown in FIG. 4.

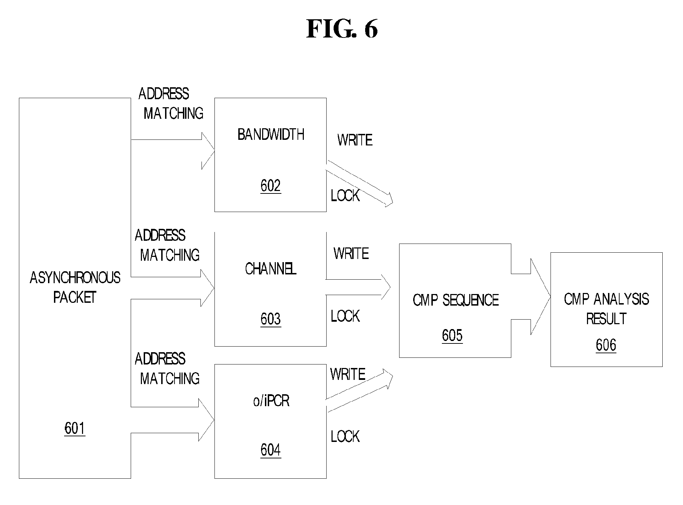

FIG. 6 shows a process of analyzing a CMP sequence on the basis of an IEC61883 protocol according to an exemplary embodiment of the invention.

The process shown in FIG. 6 corresponds to steps 404 and 408 shown in FIG. 4.

It is possible to obtain an asynchronous packet to be analyzed in step 601 according to the result obtained in step 401 shown in FIG. 4. As in step 402 shown in FIG. 4, it is possible to classify the asynchronous packet into a bandwidth 602, a channel 603, and an o/iPCR (plug control register) 604 packets by inspecting and matching the address used when a target apparatus transmits a packet, which corresponds to steps 402 to 404 shown in FIG. 4. The address of the packet of each target apparatus may be classified according to the specifications of IEEE 1394 CSR. It is determined whether to write/lock the classified packet according to the transaction code in step 402 shown in FIG. 4. The transaction code is defined by IEEE 1394 link layer specifications.

In steps 605 and 606, the linkage between the analyzed packets is inspected and rule matching is inspected to determine whether to match a CMP (connection management protocol) sequence, thereby obtaining a CMP analysis result. The CMP sequence is defined by the connection establish/break/recover of the IEEE61883 specifications, and another process is performed according to whether corresponding connection is broadcast connection or point-to-point connection.

The result corresponds to step 408 shown in FIG. 4, is classified into actions, and may be provided to the user through the action viewer 414 shown in FIG. 4.

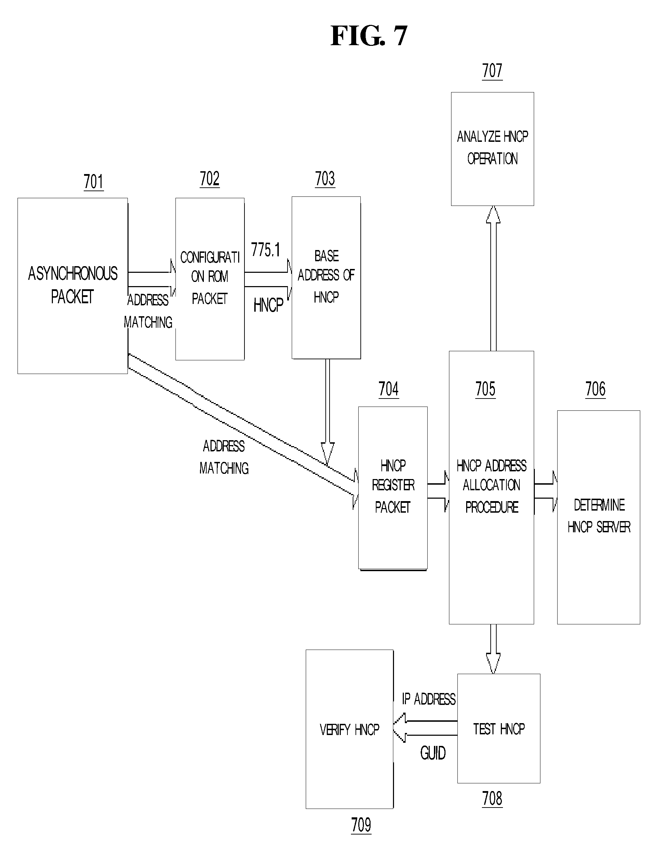

FIG. 7 shows a process of analyzing HNCP according to an exemplary embodiment of the invention.

The process shown in FIG. 7 corresponds to step 405 shown in FIG. 4.

HNCP uses a dynamic register address. The dynamic register address is located at the configuration ROM. Therefore, the configuration ROM should be analyzed before HNCP is analyzed. When information on the configuration ROM is newly found, HNCP is reanalyzed. HNCP is composed of two registers, that is, address and control registers. It is possible to detect and verify the operation of an HNCP manager (server) by analyzing a packet to be written in the control register.

It is possible to grasp the content of the configuration ROM when steps 701 and 702 are performed in the same manner as that in which steps 501 to 503 shown in FIG. 5 are performed. When EIA775.1 of the content of the configuration ROM is inspected, it is possible to obtain information related to HNCP.

In step 703, a base address of HNCP out of the information related to HNCP is used to analyze an HNCP register.

In step 704, a packet having the address matched with the base address of HNCP and the asynchronous packet 701 is a register packet of HNCP.

In step 705, it is possible to detect an address allocation procedure of HNCP by analyzing the HNCP register. For example, the address allocation procedure of HNCP is classified into a process in which the HNCP manager controls an HNCP client to use the control register to utilize a default IP and a process in which the HNCP manager controls the HNCP client to allocate an address to the address register and controls the control register to use the corresponding address.

In step 706, HNCP uses a globally unique identifier (GUID) of IEEE 1394 to determine a server. Therefore, it is possible to determine whether the server is correctly decided by inspecting whether an object using the HNCP register has a correct GUID. For example, a reverse bit of GUID (for example, 64-bit unique ID) is calculated in HNCP, and a node having the largest reverse bit is designated as a manager. Therefore, GUIDs of all HNCP nodes are inspected and the reverse bits thereof are calculated. Then, a node having the largest reverse bit is found. Thus, when the corresponding node currently serves as a manager, it is determined that the node is in a normal state. When a node not having the largest reverse bit serves as a manager, it is determined that the node violates the protocol. In this way, it is possible to know whether the HNCP server is normally decided through a series of processes in HNCP.

Further, it is possible to check whether the address register and the control register normally operate by allocating a predetermined address. In this case, preferably, it is possible to check whether the address is normally allocated by inspecting an address resolution protocol (ARP) table of IP over 1394 and by checking whether GUID is matched with IP. Since ARP has mapping information of an IP address and a physical address (IEEE 1394 node address), the inspection of ARP makes it possible to grasp an IP address of an IEEE 1394 node. For example, a predetermined address is written to the address register of a predetermined HNCP node, the address is allocated to a corresponding node by the control register, and TCP connection to the address is executed. When the connection is achieved, it is checked whether the connected object is the node. When it is determined that the connected object is the node, the node is regarded as a normal node. On the other hand, when it is determined that the connected object is not the node, it is determined that the node is an abnormal node.

In step 707, it is possible to read a subsequent HNCP operation (address allocation procedure). It is possible to know the HNCP operation by inspecting the content written in the address register and the control register.

In step 708, the operational protocol of HNCP can be tested and verified by the tester 412 shown in FIG. 4.

In step 709, the verification of HNCP is performed by changing the state of a target node using the HNCP register (address and control registers) and checking whether the change is applied. In addition, it is possible to verify whether a corresponding node has a correct GUID after detecting a node, serving as the HNCP server, by a predetermined bus reset.

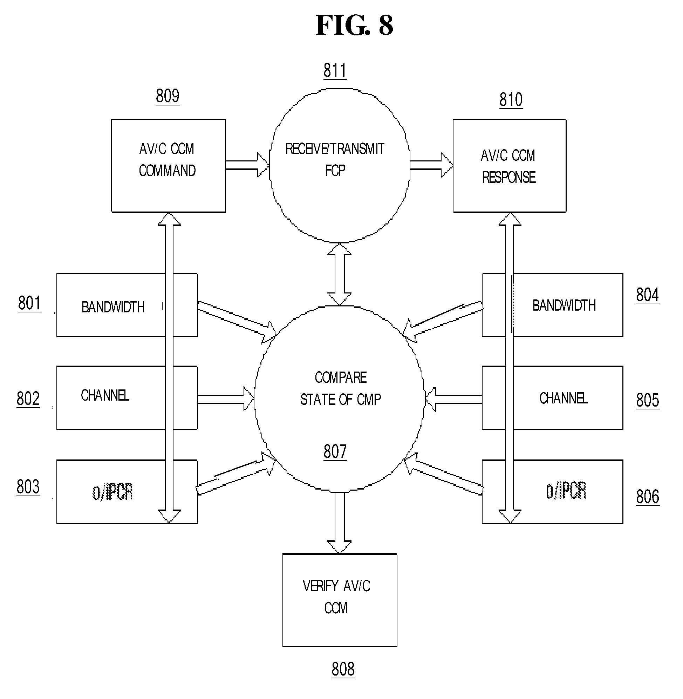

FIG. 8 shows a CCM analyzing process according to an exemplary embodiment of the invention.

The process shown in FIG. 8 corresponds to step 406 shown in FIG. 4.

CCM (connection and compatibility management) is a protocol for controlling connection through an AV/C instruction (instruction word), and the AV/C instruction allows a CMP (connection management protocol) procedure to be operated. Therefore, this verification is determined by transmitting the AV/C instruction between target apparatuses and checking whether the CMP procedure is operated on the basis of the transmission result.

AV/C is composed of a CCM command 809 and a CCM response 810, and is transmitted according to an FCP (function control protocol) 811. It is possible to know the content of the CCM command by collecting and analyzing an FCP command. In order to determine whether the CMP procedure is correctly operated, steps 801 to 807 are performed in the same manner as that shown in FIG. 6. When it is detected that a CMP procedure corresponding to the CCM command is operated, it is determined in step 808 that the CCM command is correctly issued.

For example, the CCM command may be classified into connection and disconnection instructions. In step 809, after the CCM command is found, a subsequent packet related to CMP (that is, a bandwidth, a channel, and o/iPCR) is analyzed. In this case, the analysis means analysis for similarity to the order prescribed in the connection establishment/connection breaking of IEC61883. In steps 807 and 808, it is determined whether the connection establishment of IEC61883 is successfully achieved in response to the connection instruction, or whether the connection breaking of IEC61883 is successfully achieved in response to the disconnection instruction. When the above-mentioned process is successfully completed, it is determined that the CCM command is normally issued.

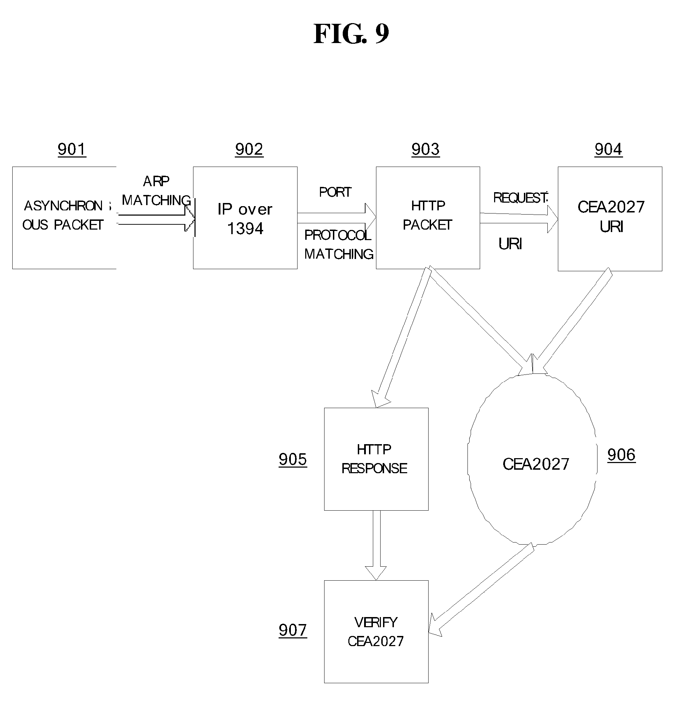

FIG. 9 shows a process of analyzing CEA2027 according to an exemplary embodiment of the invention.

The process shown in FIG. 9 corresponds to steps 407, 409, and 410 shown in FIG. 4.

In steps 901 and 902, the IP over 1394 packet is separated from the packets through steps 401 and 102 shown in FIG. 4.

Since IP over 1394 uses a variable address through an ARP protocol, the details of ARP are used in order to find whether addresses match each other. TCP is above the upper layer of IP, and the protocol number of IP and the port of TCP represent the type of protocol.

In step 903, it is possible to separate an HTTP packet from the IP packets by inspecting the two data (the protocol number and the port). The separated packet is classified by TCP session according to a protocol for creating the TCP session. In general, a start point of the TCP session is SYN-ACK, and an end point thereof is FIN-ACK. The TCP session is identical to an HTTP session, and the HTTP session is divided into an HTTP request and an HTTP response.

In step 904, when URI (uniform resource identifier) is extracted from the HTTP request and is then analyzed, it is possible to determine whether URI is defined in CEA2027.

In step 905, when URI corresponds to CEA2027, it is possible to analyze whether a correct answer is received by analyzing the HTTP response.

In steps 906 and 907, when the content of the response is suitable for content defined in CEA2027, it is possible to determine that a CEA2027 apparatus is correct.

FIG. 10 shows a screen displayed by the packet viewer 413 according to an exemplary embodiment of the invention.

The packet viewer 413 shows the specifications of protocol stacks analyzed according to layers of a packet.

The packet viewer 413 shows information on a packet type 1001 and protocol stacks 1002, 1003, and 1004.

A bit block 1005 shows bits of protocol data (or header) of the corresponding packet. Preferably, in the bit block 1005, each line is composed of a 32-bit block, and the title and the value of the protocol data of the packet are written in every predetermined threshold region. The details of main parts of the bit block 1005 are written in a predetermined frame region 1006.

A region 1007 indicates binary data of a current packet, and a region 1008 indicates the position of a packet currently selected with respect to all packets.

FIG. 11 shows a screen displayed by the action viewer 414 according to an exemplary embodiment of the invention.

More specifically, FIG. 11 shows the result obtained by analyzing linkage between packets and merging multiple packets (N packets).

For example, FIG. 11 shows the analysis result of merged configuration ROM data 1101 and configuration ROM data 1102 having a tree structure.

Also, FIG. 11 shows a list 1103 of configuration ROM packets currently analyzed. When a corresponding list is clicked, the screen shown in FIG. 10 is displayed in operative association with FIG. 10.

FIG. 12 shows a screen displayed by the flow viewer 415 according to an embodiment of the invention.

When the protocol verifying unit 240 verifies whether the packets classified through steps 403 to 410 are suitable for the XHT standard, the verifying process can be displayed on the screen in time sequence. In the display of the verifying process, the IEEE 1394 network starts from a reset operation. Therefore, preferably, at the time of reset, the display of the verifying process is initialized, and subsequent verified processes are sequentially displayed. At this time, information items transmitted along a vertical time axis for an XHT standard verifying process of packets between nodes on the network may be displayed together with marks indicating directions in which information is exchanged between nodes (for example, arrows) in the horizontal axis. Next, the verifying process will be described in detail below.

Nodes on the network that are currently analyzed are displayed (1220, 1230, and 1240).

Steps 1201 to 1204 show processes after bus reset.

Steps 1201 to 1203 show that nodes read their configuration ROMs.

Step 1201 shows that a node ID 02 (1240) reads out the configuration ROM of a node ID 00 (1220).

Step 1202 shows that the node ID 02 (1240) reads out its own configuration ROM.

Step 1203 shows that the node ID 02 (1240) reads out the configuration ROM of a node ID 01 (1230).

Therefore, a user can confirm through steps 1201 to 1203 the fact that the node ID 02 (1240) has inspected the configuration ROM of each node in an initial stage of hot-plug (that is, the recognition of an apparatus) after the bus reset.

Steps 1204 and 1205 show the specifications of the AV/C instruction.

In step 1204, the node ID 00 (1220) transmits an AV/C SUBUNIT INFO instruction to the node ID 02 (1240) to obtain information on the AV/C SUBUNIT type of the node ID 02 (1240).

In step 1205, the node ID 02 (1240) transmits the AV/C SUBUNIT INFO instruction to the node ID 00 (1220) to obtain information on the AV/C SUBUNIT type of the node ID 00 (1220).

Therefore, a user can confirm through steps 1204 and 1205 the fact that the node ID 00 (1220) has inspected the AV/C SUBUNIT type of the node ID 02 (1240) and the node ID 02 (1240) has inspected the AV/C SUBUNIT type of the node ID 00 (1220). Thus, the user can determine that both the node ID 00 (1220) and the node ID 02 (1240) support AV/C.

Steps 1206 and 1207 indicate operations related to HNCP.

In step 1206, the node ID 02 (1240) sets the IP address of the node ID 00 (1220) to 192.168.0.20.

In step 1207, the node ID 02 (1240) sets its own IP address to 192.168.0.21.

Therefore, a user can confirm through steps 1206 and 1207 the fact that the node ID 02 (1240) has served as the HNCP manager. Also, the user can grasp addresses allocated to the nodes.

Step 1208 includes steps 1209 and 1211 to 1214, and shows information displayed for every HTTP session.

In step 1208, the node ID 02 (1240) reads out a 2027_file of the node ID 00 (1220) through HTTP. Since the 2027_file is a URI defined to include device information in CEA2027, the user can determine that both the node ID 00 (1220) and the node ID 02 (1240) support CEA2027.

Step 1210 relates to CMP.

In step 1210, CMP connection between the node ID 02 (1240) and the node ID 00 (1220) is set. According to the CMP protocol, it is possible to determine that the node ID 02 (1240) serves as a sink, and the node ID 00 (1220) serves as a source.

Therefore, the user can understand that the node ID 02 (1240), serving as the sink, requires connection to a zero-numbered output (oPCR 00) of the node ID 00 (1220) and the connection therebetween succeeds.

Steps 1209 and 1211 to 1214 show information displayed for every HTTP session.

In step 1209, the node ID 02 (1240) reads out "icon_graphic" from the node ID 00 (1220). Since the "icon_graphic" corresponds to an icon image of an apparatus in CEA2027, it can be understood that the node ID 02 (1240), serving as a monitor DTV, reads out the "icon_graphic" to make a list of apparatuses.

In step 1211, the node ID 02 (1240) reads out "control_frame" from the node ID 00 (1220). Since the "control_frame" corresponds to a screen for controlling an apparatus in CEA2027, it can be understood that the node ID 02 (1240), serving as the monitor DTV, requires a control page to control the node ID 00 (1220), which is a target apparatus, and reads out the "control_frame".

In steps 1212 to 1214, the node ID 02 (1240) reads out various image files from the node ID 00 (1220). Since steps 1212 to 1214 are performed after the "control_frame" is read out, it is possible to infer that the image files are image pieces forming the "control_frame".

Although the present invention has been described in connection with the exemplary embodiments of the invention, it will be apparent to those skilled in the art that various modifications and changes may be made thereto without departing from the scope and spirit of the invention. Therefore, it should be understood that the above embodiments are not limitative, but illustrative in all aspects.

As described above, an apparatus and method for analyzing an XHT protocol according to Preferred embodiments of the invention can obtain the following effects.

First, the existing system focuses on a function of verifying an IEEE 1394 bus, but does not have other functions. However, according to an aspect of the invention, it is possible to verify CEA2027, which is an uppermost level of XHT. Thus, it is possible to verify and show the content of the overall XHT system, and a user can determine whether the content of the overall XHT system is normal.

Second, it is easy to develop the XHT system by analyzing and verifying CEA2027, which is a new standard, and a protocol newly used in the XHT system, such as CCM or HNCP.

Third, it is possible to determine compatibility with an XHT apparatus that is being newly developed. Thus, it is possible to guide an XHT system to be correctly developed according to a standard.Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus (200) for analyzing an XHT protocol, the apparatus comprising:
a packet collecting unit (210) which captures packets on a network and collects data to be analyzed;
a classifying unit (230) which classifies the packets according to type of packets; and
a protocol verifying unit (240) which verifies whether the classified packets are suitable for an XHT standard according to the type of packets.

2. The apparatus (200) of claim 1, further comprising a packet analyzing unit (220) which analyzes the packets, wherein the network is an IEEE 1394 network, and the packet analyzing unit analyzes the packets from a link layer of the IEEE 1394 network.

3. The apparatus (200) of claim 2, wherein the packets are classified according to at least one of a packet type, a target address, and a transaction code.

4. The apparatus (200) of claim 3, wherein the classified packets are at least one of IP over 1394, AV/C, HNCP, IEC61883, and IEEE 1394 Core CSR including configuration ROM data.

5. The apparatus (200) of claim 4, wherein information related to the HNCP is obtained by inspecting the content of EIA775.1 out of the configuration ROM data.

6. The apparatus (200) of claim 5, wherein a register of the HNCP is analyzed by using the value of a base address of the HNCP out of the information related to the HNCP.

7. The apparatus (200) of any one of claims 2-6, further comprising a display unit (250) which displays on a screen at least one of specifications of a protocol stack obtained by analyzing each layer of the packets, a result obtained by analyzing linkage between the packets, and a verifying process when the verification of the packets is completed.

8. The apparatus (200) of claim 7, wherein, in the display of the specifications of the protocol stack obtained by analyzing each layer of the packets, a title and a value of protocol data of the packets are written in every threshold region of a block having a predetermined number of bits.

9. The apparatus (200) of claim 7 or claim 8, wherein the display of the verifying process is initialized when the IEEE 1394 network is reset, and information transmitted between the nodes on the network along a time axis after the initialization is displayed together with a mark indicating a direction in which information is exchanged between the nodes.

10. A method of analyzing an XHT protocol, the method comprising:
capturing packets on a network and collecting data to be analyzed;
classifying the packets according to type of packets; and
verifying whether the classified packets are suitable for an XHT standard according to the type of packets.

11. The method of claim 10, further comprising analyzing the packets, wherein the network is an IEEE 1394 network, and the analyzing of the packets is performed from a link layer of the IEEE 1394 network.

12. The method of claim 11, wherein the packets are classified according to at least one of a packet type, a target address, and a transaction code.

13. The method of claim 12, wherein the classified packets are at least one of IP over 1394, AV/C, HNCP, IEC61883, and IEEE 1394 Core CSR including configuration ROM data.

14. The method of claim 13, wherein information related to the HNCP is obtained by inspecting the content of EIA775.1 out of the configuration ROM data.

15. The method of claim 14, wherein a register of the HNCP is analyzed by using the value of a base address of the HNCP out of the information related to the HNCP.

16. The method of claim 11, further comprising displaying on a screen at least one of specifications of a protocol stack obtained by analyzing each layer of the packets, a result obtained by analyzing linkage between the packets, and a verifying process when the verification of the packets is completed.

17. The method of claim 16, wherein, in the display of the specifications of the protocol stack obtained by analyzing each layer of the packets, a title and a value of protocol data of the packets are written in every threshold region of a block having a predetermined number of bits.

18. The method of claim 16, wherein the display of the verifying process is initialized when the IEEE 1394 network is reset, and information transmitted between the nodes on the network along a time axis after the initialization is displayed together with a mark indicating a direction in which information is exchanged between the nodes.
